# FASCICULE DE BREVET EUROPEEN

(11) **EP 4 541 633 B1**
(45) Date de publication et mention de la délivrance du brevet: **08.07.2026**
(21) Numéro de dépôt: 24206839.3
(22) Date de dépôt: 16.10.2024
(51) Int. Cl.: B60K 37/20, B60H 1/00, B62D 25/14, B60H 1/24, B60H 1/34

(54) **TABLEAU DE BORD ET VÉHICULE AUTOMOBILE COMPRENANT UN TEL TABLEAU DE BORD**
INSTRUMENTENTAFEL UND KRAFTFAHRZEUG MIT EINER SOLCHEN INSTRUMENTENTAFEL
DASHBOARD AND MOTOR VEHICLE COMPRISING SUCH A DASHBOARD

(30) Priorité: 17.10.2023 FR 2311178
(43) Date de publication de la demande: 23.04.2025
(73) Titulaire: Faurecia Intérieur Industrie, 92000 Nanterre (FR)
(72) Inventeur: DIESTRE, Angel, 08022 BARCELONE (ES); MACIAS, FERRAN, 08192 BARCELONE (ES); ONORATO ESTEVEZ, David, 08192 BARCELONE (ES)
(74) Mandataire: Novagraaf Group

(56) Documents cités:
- FR-B1- 2 756 514
- US-A1- 2002 017 798
- US-A1- 2020 247 478

## Description

La présente invention se rapporte généralement à un tableau de bord de véhicule où sont intégrés des conduits d'air.

Un tel tableau de bord peut comprendre une structure rigide, et des conduits d'air composés de tubes. Les tubes sont insérés à l'intérieur de la structure rigide.

FR 2 756 514 - B1 divulgue un tableau de bord de l'état de l'art.

Un tel tableau de bord a une structure relativement complexe, et est coûteux à fabriquer.

Dans ce contexte, l'invention vise à fournir un tableau de bord avec une structure plus simple, moins coûteuse à fabriquer.

À cette fin, l'invention se rapporte à un tableau de bord comprenant :
- une structure porteuse ayant une première grande face et une seconde grande face opposée à la première grande face ;
- une première structure déformable, délimitant au moins un premier conduit ayant un côté ouvert, la première structure déformable étant fixée à la structure porteuse, le côté ouvert du ou de chaque premier conduit étant fermé par la première grande face de la structure porteuse ;
- une seconde structure déformable, délimitant au moins un second conduit ayant un côté ouvert, la seconde structure déformable étant fixée à la structure porteuse, le côté ouvert du ou de chaque second conduit étant fermé par la seconde grande face de la structure porteuse dans lequel la première structure déformable et/ou la seconde structure déformable sont uniquement fixées à la structure porteuse.

Les première et seconde structures déformables sont faciles et peu coûteuses à fabriquer, par exemple par injection d'une matière plastique. Les premier et second conduits sont ouverts d'un côté, de sorte qu'ils peuvent être obtenus facilement lors de la fabrication des première et seconde structures déformables.

Les premier et second conduits sont fermés par les première et seconde grandes faces de la structure porteuse, ce qui peut être obtenu de manière très pratique lors de la fixation des première et seconde structures déformables à la structure porteuse.

Il n'est donc pas nécessaire d'insérer une structure tubulaire à l'intérieur de la structure porteuse, ce qui est une opération assez longue et complexe.

Dans l'ensemble, la fabrication du tableau de bord est facilitée, et le coût de ce tableau de bord est réduit.

Le tableau de bord peut également avoir une ou plusieurs des caractéristiques ci-dessous, considérées individuellement ou selon toutes les combinaisons techniquement possibles :
- la première structure déformable et/ou la seconde structure déformable sont faites d'un matériau plastique avec une épaisseur inférieure à 2 mm, par exemple PE ou PP ;
- la première structure déformable et/ou la seconde structure déformable sont faites d'un plastique expansé ;
- la première structure déformable et/ou la seconde structure déformable sont fixées à la structure porteuse par des soudures, par exemple des soudures par ultrasons ;
- le tableau de bord comprend un couvercle de garniture couvrant la structure porteuse, la première structure déformable et la seconde structure déformable, et définissant une surface visible pour les passagers du véhicule ;
- l'au moins un premier conduit et l'au moins un second conduit sont en communication fluidique l'un avec l'autre et forment ensemble un conduit d'air, l'un parmi les au moins un premier conduit et au moins un second conduit définissant une section amont du conduit d'air, l'autre parmi les au moins un premier conduit et au moins un second conduit définissant une section aval du conduit d'air ;
- la structure porteuse comprend au moins deux entrées d'air, l'une des entrées d'air étant en communication fluidique avec le premier conduit et une autre des entrées d'air étant en communication fluidique avec le second conduit ;
- la portion de la première structure déformable définissant l'au moins un premier conduit et/ou la portion de la seconde structure déformable définissant l'au moins un second conduit ont une section transversale essentiellement en forme de U.

Selon un second aspect, l'invention se rapporte à un véhicule automobile comprenant un compartiment passager, un pare-brise et un tableau de bord ayant les caractéristiques ci-dessus logés dans le compartiment passager, l'au moins un premier conduit appartenant à un circuit de dégivrage et ayant des orifices destinés à souffler de l'air vers le pare-brise l'au moins un second conduit appartenant à un circuit de climatisation du compartiment passager et approvisionnant en air les orifices agencés pour souffler de l'air dans l'atmosphère du compartiment passager.

Le véhicule automobile peut également avoir la caractéristique suivante :
- les orifices de soufflage d'air approvisionnés par l'au moins un second conduit débouchent directement dans un volume situé à l'arrière du tableau de bord.

D'autres caractéristiques et avantages de l'invention ressortiront de la description détaillée de celle-ci fournie ci-après, à titre indicatif et de manière non limitative, en référence aux figures annexées, parmi lesquelles :
- La Figure 1 est une vue schématique en coupe longitudinale d'un véhicule intégrant un tableau de bord selon l'invention ;
- La Figure 2 est une vue éclatée, en perspective, du tableau de bord de la Figure 1 ; et

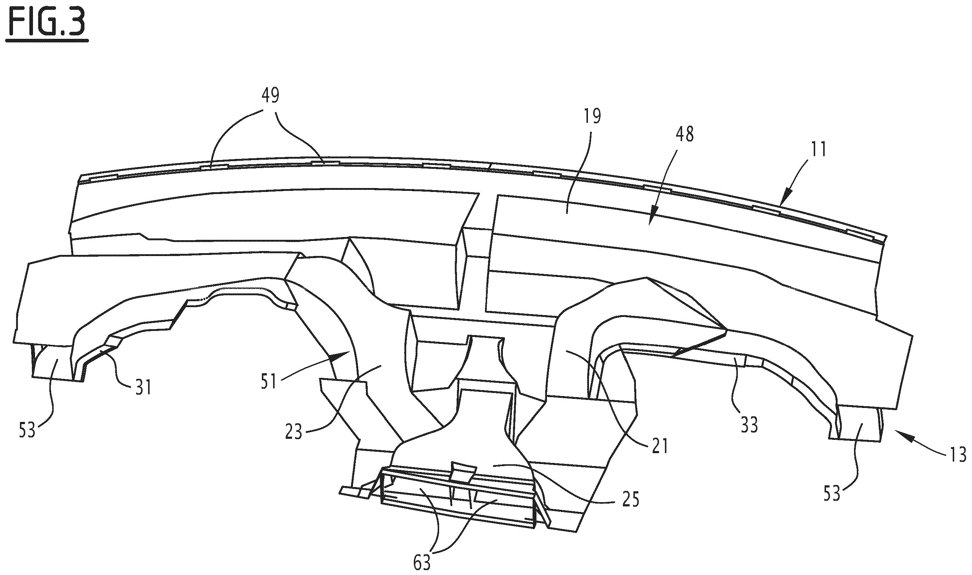

- la Figure 3 est une vue en perspective du tableau de bord de la Figure 2, à l'état assemblé.

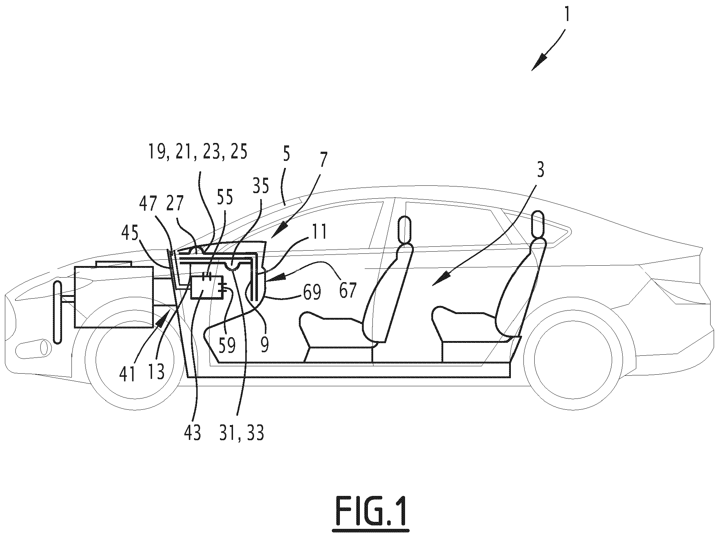

Le véhicule 1 représenté sur la Figure 1 comprend un compartiment passager 3, un pare-brise 5 et un tableau de bord 7 logé dans le compartiment passager 3.

Dans l'exemple représenté, le véhicule automobile est une voiture.

En variante, le véhicule automobile est un camion, ou un bus, ou un véhicule utilitaire, ou un train, ou tout autre véhicule automobile.

Dans la présente description, la direction longitudinale correspond à la direction de déplacement normale du véhicule automobile. La direction verticale est perpendiculaire au plan de roulement du véhicule, et la direction transversale est perpendiculaire à la fois à la direction longitudinale et à la direction verticale.

Par avant et arrière on entend par rapport à la direction longitudinale. Le haut et le bas, au-dessus et en dessous, sont compris par rapport à la direction verticale. Par droite et gauche on entend par rapport à la direction transversale.

Le pare-brise 5 est la fenêtre délimitant le compartiment passager 3 vers l'avant.

Le compartiment passager 3 est l'espace intérieur du véhicule où sont logés les passagers.

Le tableau de bord 7 est agencé à l'avant du compartiment passager 3, sous le pare-brise 5. Il s'étend transversalement d'un côté à l'autre du compartiment passager 3.

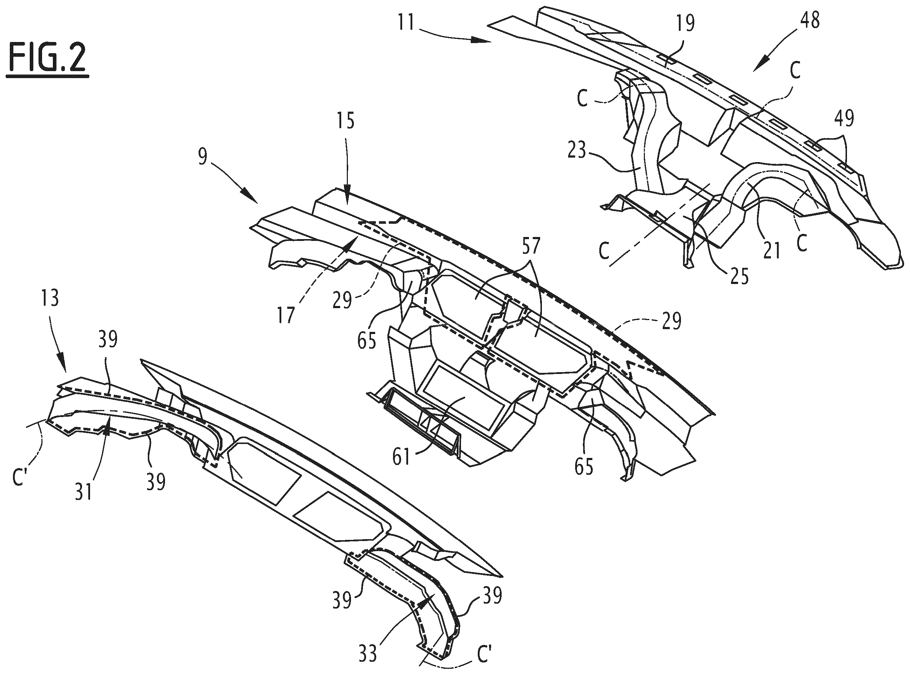

Comme il est clairement visible sur la Figure 2, le tableau de bord 7 comprend une structure porteuse 9, une première structure déformable 11 et une seconde structure déformable 13.

La structure porteuse 9 est une structure relativement rigide, conférant sa rigidité structurelle au tableau de bord 7. La structure porteuse 9 est une structure mince, de forme complexe.

La structure porteuse 9 est de manière générale une coque fine, composée de matière plastique.

Elle est obtenue par injection ou thermoformage de la matière plastique.

La structure porteuse 9 a une épaisseur significative, entre 1 et
10 millimètres, de préférence entre 1 et 5 millimètres, plus préférentiellement entre 1,5 et 2,5 millimètres.

La matière plastique est par exemple du polypropylène (PP), ou du polyéthylène (PE), ou du polycarbonate (PC) ou encore du polystyrène (PS).

La matière plastique est avantageusement renforcée par des fibres, par exemple avec des fibres naturelles (chanvre, bois, ...) ou de verre.

Selon un exemple de mode de réalisation, la structure porteuse 9 est faite en polypropylène renforcé de fibres de verre, obtenue par injection, et ayant une épaisseur de 2,5 millimètres.

Alternativement, la structure porteuse 9 est faite d'un mélange de polyéthylène et de polystyrène thermoformé, et a une épaisseur d'environ 1,5 millimètres.

La structure porteuse 9 a une première grande face 15 et une seconde grande face 17 opposée à la première grande face 15.

Les première et seconde grandes faces 15, 17 sont les deux faces opposées de la coque constituant la structure porteuse.

La première grande face 15 fait face vers le haut. Elle fait face vers le pare-brise 5.

La seconde grande face 17 fait face vers le bas. Elle fait face au plancher du compartiment passager 3.

La première structure déformable 11 est fixée à la structure porteuse 9. Elle est fixée uniquement à la structure porteuse 9, dans le sens où elle n'a pas d'attache à un élément du tableau de bord ou du véhicule autre que la structure porteuse 9. Ainsi, toutes les forces appliquées sur la première structure déformable 11 sont reprises par la structure porteuse 9.

La première structure déformable 11 est une coque déformable, composée de matière plastique.

La première structure déformable 11 est obtenue par thermoformage, par expansion ou par injection de la matière plastique.

La première structure déformable 11 est en un matériau déformable.

Cela signifie que la première structure déformable 11 est faite d'un matériau qui se déforme sans créer de fissure ou de zone de rupture en cas d'interférence avec une autre structure du tableau de bord ou du véhicule. Une telle interférence se produit de manière générale lors de l'assemblage des divers composants du tableau de bord, ou lors du montage du tableau de bord à bord du véhicule. Il peut arriver que lors de l'assemblage ou du montage, la première structure déformable vienne reposer, temporairement ou de façon permanente, contre une autre structure, et est donc déformée. Cette déformation ne provoque pas d'endommagement irréparable à la première structure déformable 11, car celle-ci est faite d'un matériau déformable.

La première structure déformable 11 est dans ce but en une matière plastique avec une épaisseur inférieure à 2 millimètres, par exemple comprise entre 0,1 et 1 millimètre, et encore plus préférentiellement entre 0,4 et 0,7 mm. Elle présente par exemple une épaisseur de 0,5 millimètre.

Le matériau plastique est du PE, ou du PP, ou un mélange de PE et de PP.

Il est avantageusement fait d'une mousse d'un de ces matériaux plastiques. Alternativement, la matière plastique est non expansé, et est pleine, par exemple faite par injection plastique.

La première structure déformable 11 est de forme complexe.

La première structure déformable 11 délimite au moins un premier
conduit 19, 21, 23, 25 ayant un côté ouvert 27 (Figure 1). Le côté ouvert 27 du ou de chaque premier conduit 19, 21, 23, 25 est fermé par la première grande face 15 de la structure porteuse 9.

Dans l'exemple représenté, la première structure déformable 11 délimite plusieurs premiers conduits référencés 19, 21, 23, 25 dont les fonctions seront décrites ci-après.

Le ou chaque premier conduit 19, 21, 23, 25 a une forme complexe, de manière générale non rectiligne.

Le ou chaque premier conduit 19, 21, 23, 25 a une forme allongée, et s'étend le long d'une ligne centrale C (Figure 2). Cette ligne centrale C s'étend le long d'un trajet tridimensionnel dans les exemples représentés.

Le côté ouvert 27 s'étend sensiblement sur toute la longueur du premier conduit 19, 21, 23, 25, la longueur étant prise le long de la ligne centrale C. Le côté ouvert 27 est situé latéralement par rapport à la ligne centrale C. En d'autres termes, le ou chaque premier conduit 19, 21, 23, 25 est ouvert sur une partie de sa périphérie, cette périphérie étant considérée autour de la ligne centrale C.

Le côté ouvert 27 couvre, autour de la ligne centrale C, un secteur angulaire de manière générale compris entre 30° et 180°, de préférence entre 45° et 135°, plus préférentiellement compris entre 60° et 120°.

Ce côté ouvert 27 est fermé de manière étanche par la première grande face 15.

Pour ce faire, la première structure déformable 11 est placée directement contre la première grande face 15 de la structure porteuse 9.

Elle est fixée à la structure porteuse 9 par des soudures, par exemple par soudure ultrasonore et ou soudure par vibrations.

Ces soudures sont, par exemple, des soudures en miroir.

Le soudage en miroir est une technique de soudage thermique destinée à joindre des thermoplastiques, à l'aide d'un outil apte à chauffer par deux côtés en même temps. L'outil est introduit entre les deux structures à souder l'une à l'autre, ici la structure porteuse 9 et la première structure déformable 11. Après que les structures sont chauffées, les structures sont plaquées l'une contre l'autre.

La première structure déformable 11 est ainsi fixée à la structure porteuse 9, et plus précisément à la première grande face 15, par deux lignes de soudure 29 pour chaque premier conduit 19, 21, 23, 25. Ces lignes de soudure 29 s'étendent le long et de part et d'autre du côté ouvert 27. Les lignes de soudure 29 s'étendent sur toute la longueur du ou de chaque premier conduit 19, 21, 23, 25, la longueur étant ici entendue comme étant l'étendue du premier conduit le long de la ligne centrale C. Les lignes de soudure 29 se rejoignent à leurs extrémités pour former un contour fermé, ou se rejoignent uniquement à une des deux extrémités, ou alternativement ne se rejoignent pas. Alternativement, la première structure déformable 11 est fixée à la structure porteuse 9, par des points de soudure distincts et ou une portion.

Sur la Figure 2, uniquement les lignes de soudure 29 du premier conduit 19 ont été représentées.

La seconde structure déformable 13 est du même type que la première structure déformable 11.

La seconde structure déformable 13 est une coque fine, composée de matière plastique.

La seconde structure déformable 13 est obtenue par injection, par expansion ou par thermoformage de la matière plastique.

Elle a une forme complexe.

La seconde structure déformable 13 est en un matériau déformable.

À cet effet, la seconde structure déformable 13 est en une matière plastique avec une épaisseur inférieure à 2 millimètres, de préférence entre 0,1 et 1 millimètre, plus préférentiellement entre 0,4 et 0,7 mm. Elle présente par exemple une épaisseur de 0,5 millimètre.

Le matériau plastique est du PE, ou du PP, ou un mélange de PE et de PP.

Il est avantageusement fait d'une mousse d'un de ces matériaux plastiques. Alternativement, la matière plastique est non expansée, et est complètement par exemple faite par injection plastique.

La seconde structure déformable 13 est fixée à la structure porteuse 9. Elle est fixée uniquement à la structure porteuse 9, en ce sens qu'elle ne comporte aucun point d'attache à un autre organe du tableau de bord ou du véhicule. Toutes les forces appliquées sur la seconde structure déformable 13 sont reprises par la structure porteuse 9.

La seconde structure déformable 13 délimite au moins un second conduit 31, 33 ayant un côté ouvert 35. Le côté ouvert 35 du ou de chaque premier conduit 31, 33 est fermé par la première grande face 17 de la structure porteuse 9.

Dans l'exemple représenté, la seconde structure déformable 13 délimite deux seconds conduits 31, 33 dont les fonctions seront décrites ci-après.

Tel que décrit précédemment, le ou chaque second conduit 31, 33 a une forme complexe, et a une forme allongée le long d'une ligne centrale C'. Cette ligne centrale C' présente de manière générale une disposition tridimensionnelle.

Le côté ouvert 35 s'étend sur toute la longueur du ou de chaque second conduit 31, 33, cette longueur étant prise le long de la ligne centrale C'. Elle s'étend latéralement par rapport à la ligne centrale C'. En d'autres termes, le ou chaque second conduit 31, 33 est ouvert sur une partie de sa circonférence, cette circonférence étant prise autour de la ligne centrale C'.

Comme précédemment, le côté ouvert 35 couvre, autour de la ligne centrale C', un secteur angulaire compris entre 30° et 180°, de préférence compris entre 45° et 135°, et encore plus préférentiellement compris entre 60° et 120°.

La seconde structure déformable 13 est directement fixée à la structure porteuse 9, et plus précisément à la seconde grande face 17.

Elle est de manière générale fixée par des soudures à la structure porteuse 9, par exemple par des soudures par ultrasons ou par vibrations.

Comme précédemment, ces soudures sont de manière générale des soudures en miroir.

Le côté ouvert 35 du ou de chaque second conduit 31, 33 est fermé de manière étanche par la seconde grande face 17.

À cet effet, la seconde structure déformable 13 est fixée à la structure porteuse 9 par des lignes de soudure 39 qui s'étendent de part et d'autre du ou de chaque côté ouvert 35. Les lignes de soudure 39 s'étendent sur toute la longueur du ou de chaque second conduit 31, 33, cette longueur étant prise le long de la ligne centrale C'. Alternativement, la seconde structure déformable 113 est fixée à la structure porteuse 9, par des points de soudure distincts et ou une portion.

Les lignes de soudure 39 se rejoignent aux deux extrémités du ou de chaque second conduit 31, 33, formant ainsi une ligne avec un contour fermé. Alternativement, elles se rejoignent à une seule extrémité comme représenté sur la Figure 2, ou elles ne se rejoignent pas.

Ainsi, la première structure déformable 11 est plaquée contre la première grande face 15, et la seconde structure déformable 13 est plaquée contre la seconde grande face 17. La première structure déformable 11 est ainsi située au-dessus de la structure porteuse 9, et la seconde structure déformable 13 est placée sous la structure porteuse 9.

Le véhicule automobile 1 comprend un dispositif de climatisation 41. Ce dispositif de climatisation 41 comprend une unité de climatisation 43, reliée par un conduit amont 45 à une entrée d'air 47 débouchant hors du véhicule.

L'unité de climatisation 43 est conçue pour contrôler la température de l'air soufflé par le dispositif de conditionnement 41 à l'intérieur du compartiment passager 3.

Elle comporte au moins un chauffage, conçu pour chauffer l'air aspiré par l'entrée d'air 47. Également elle comporte de manière générale un refroidisseur, configuré pour refroidir l'air aspiré par l'entrée d'air 47.

L'au moins un premier conduit 19, 21, 23, 25 et l'au moins un second conduit 31, 33 sont intégrés au dispositif de climatisation 41.

Au moins un premier conduit appartient à un circuit de dégivrage 48, et comprend des orifices 49 destinés à souffler de l'air vers les fenêtres de pare-brise 5 et/ou portière.

Au moins un second conduit appartient à un circuit de climatisation 51 du compartiment passager 3 et approvisionne en air les orifices 53 agencés pour souffler de l'air dans l'atmosphère du compartiment passager. Les orifices 53 peuvent être équipés d'un évent destiné à contrôler la directivité du flux d'air.

Dans l'exemple représenté, l'un des premiers conduits, à savoir le premier conduit 19, est intégré au circuit de dégivrage 48. Les autres premiers conduits, ici les premiers conduits 21, 23 et 25, sont intégrés dans le circuit de climatisation 51 du compartiment passager. Les seconds conduits 31, 33 sont tous intégrés au circuit de climatisation 51 du compartiment passager.

Le circuit de climatisation 51 du compartiment passager a pour unique fonction de régler la température de l'air à l'intérieur du compartiment passager 3, et n'a pas la fonction de dégivrage des fenêtres du véhicule, ou toute autre fonction technique supplémentaire.

Les orifices de soufflage d'air 53 approvisionnés par le ou chaque second conduit 31, 33 débouchent directement dans un volume situé à l'arrière du tableau de bord. Ils débouchent dans le volume situé entre le tableau de bord 7 et les sièges avant du véhicule.

Le circuit de climatisation 51 du compartiment passager comprend également d'autres orifices de soufflage d'air qui seront décrits ultérieurement.

L'unité de climatisation 43 a une première sortie d'air climatisé 55, reliée fluidiquement au premier conduit 19. Cette liaison n'est pas représentée sur les figures.

À cet effet, la structure porteuse 9 comprend deux entrées d'air 57 reliées fluidiquement au premier conduit 19. Les entrées d'air 57 sont des orifices découpés dans la structure porteuse 9. Elles sont reliées fluidiquement à la première sortie d'air climatisé 55. Elles débouchent directement dans le premier conduit 19.

Le premier conduit 19 s'étend transversalement sur la plus grande partie de la largeur transversale du tableau de bord. Il présente une ligne centrale C légèrement arquée, parcourant le long du pare-brise 5.

L'unité de climatisation 43 comporte en outre une seconde sortie d'air climatisé 59, reliée fluidiquement au circuit de climatisation 51 du compartiment passager. La sortie d'air 59 peut être équipée d'un évent destiné au contrôle de la directivité du flux d'air.

À cet effet, la structure porteuse 9 comprend une entrée d'air 61 communiquant fluidiquement avec au moins un second conduit 31, 33.

L'entrée d'air 61 est reliée fluidiquement à la sortie d'air climatisé 59 par un conduit non représenté. Il est constitué d'un orifice découpé dans la structure porteuse 9.

Le premier conduit 25 approvisionne directement en air des orifices 63 de soufflage d'air débouchant dans l'atmosphère du compartiment passager. Les orifices 63 sont placés au centre du tableau de bord, tandis que les orifices 53 sont placés transversalement à gauche et à droite du tableau de bord.

Le premier conduit 25 relie fluidiquement l'entrée d'air 61 aux orifices de soufflage d'air 63.

Dans l'exemple représenté, l'entrée d'air 61 ne débouche pas directement dans les seconds conduits 31, 33.

Tel qu'il est visible sur la Figure 2, les seconds conduits 31, 33 sont disposés transversalement à gauche et à droite du tableau de bord.

La structure porteuse 9 a des orifices de passage 65, découpés dans cette structure. Le second conduit 31 relie l'un des orifices de passage 65 à l'un des orifices de soufflage 53. L'autre second conduit 33 relie l'autre orifice de passage 65 à l'autre orifice de soufflage 53.

En outre, les premiers conduits 21 et 23 sont agencés de sorte à placer le premier conduit 25 en communication fluidique avec les deux orifices 65.

Ainsi, les premiers conduits 25 et 21 et le second conduit 33 définissent ensemble un conduit d'air, les premiers conduits 21 et 25 définissant une section amont du conduit d'air et le second conduit 33 définissant une section aval du conduit d'air.

De manière similaire, les premiers conduits 25 et 23 et le second conduit 31 définissent ensemble un autre conduit de ventilation. Les premiers conduits 25 et 23 définissent une section amont du conduit de ventilation et le second conduit 31 définit une section aval du conduit de ventilation.

Il est à noter que la première structure déformable 11 contient des portions autres que celles servant à définir l'au moins un premier conduit 19, 21, 23, 25.

Ces portions sont prévues pour être attachées à la structure porteuse 9, ou pour d'autres fonctions techniques qui ne seront pas décrites ici.

De la même manière, la seconde structure déformable 13 comprend des portions en plus de celles définissant l'au moins un second conduit 31, 33. Ces portions sont par exemple destinées à fixer la seconde structure déformable 13 à la structure porteuse 9.

Tel qu'il est visible sur la Figure 1, le tableau de bord comporte une garniture 67 couvrant la structure porteuse 9, la première structure déformable 11 et la seconde structure déformable 13. Cette garniture 67 définit une surface 69 visible aux passagers du véhicule.

La garniture 67 est généralement appelée le couvercle du tableau de bord. Elle occulte les parties fonctionnelles du tableau de bord, en particulier la structure porteuse 9, la première structure déformable 11 et la seconde structure déformable 13.

Le tableau de bord et le véhicule décrits ci-dessus ont de multiples avantages.

Du fait que la première structure déformable et/ou la seconde structure déformable sont uniquement fixées sur la structure porteuse, le montage du tableau de bord dans le véhicule est particulièrement simple.

Étant donné que la première structure déformable et/ou la seconde structure déformable sont faites d'un matériau déformable, il est possible de tolérer des interférences entre la première structure déformable et/ou la seconde structure déformable et d'autres éléments du tableau de bord ou du véhicule. Tout d'abord, cela rend le tableau de bord plus compact. Il n'est pas nécessaire de respecter une distance minimale entre la première structure déformable et/ou la seconde structure déformable et les structures qui les entourent. Le risque de génération de bruit parasite par des vibrations se propageant dans le tableau de bord est également réduit.

Lorsque la première structure déformable et/ou la seconde structure déformable sont en une matière plastique avec une épaisseur inférieure à
2 millimètres et/ou en une mousse de matière plastique, il est possible d'obtenir facilement des structures déformables.

La fixation de la première structure déformable et/ou de la seconde structure déformable à la structure porteuse par des soudures est particulièrement pratique. La conception du tableau de bord est particulièrement adaptée à une attache par soudage. Elle est composée de plusieurs coques fines, fixées l'une à l'autre par des lignes de soudure qui sont particulièrement faciles à obtenir. Le risque de générer des rebuts lors de la soudure est réduit.

Le fait que le tableau de bord comporte une garniture couvrant la structure porteuse, la première structure déformable et la seconde structure déformable et définissant la surface visible pour les passagers du véhicule permet d'améliorer facilement l'aspect du tableau de bord.

Lorsqu'au moins un premier conduit et au moins un second conduit sont en communication fluidique l'un avec l'autre, et forment ensemble un conduit d'air, au moins un premier conduit définissant une section amont du conduit d'air et au moins un second conduit définissant une section aval du conduit d'air, il est possible d'obtenir des conduits d'air de formes complexes dans le tableau de bord.

De plus, la structure porteuse peut comporter plusieurs entrées d'air, permettant d'organiser la circulation d'air dans les conduits d'air en fonction des besoins.

Lorsqu'au moins un premier conduit appartient à un circuit de dégivrage et a des orifices de soufflage d'air vers le pare-brise, et au moins un second conduit appartient à un circuit de climatisation du compartiment passager approvisionnant en air des orifices soufflant de l'air dans l'atmosphère du compartiment passager, il est possible d'intégrer facilement au tableau de bord à la fois le circuit de dégivrage et le circuit de climatisation du compartiment passager. Ces circuits peuvent être faits à l'aide de trois structures déformables. Ces circuits sont faits de manière simple et robuste.

Le tableau de bord et le véhicule peuvent avoir plusieurs variantes.

La structure porteuse, la première structure déformable et la seconde structure déformable peuvent avoir toutes sortes de formes, différentes des formes représentées sur les figures.

La première structure déformable peut délimiter un seul premier conduit ou alternativement deux premiers conduits, trois premiers conduits ou plus de trois premiers conduits comme dans l'exemple représenté.

De même, la seconde structure déformable peut délimiter un unique second conduit, ou deux seconds conduits, ou plus de deux seconds conduits.

Dans l'exemple ci-dessus, il a été décrit que le circuit de dégivrage comporte un conduit d'air défini par un seul premier conduit. En variante, le conduit d'air du circuit de dégivrage peut comprendre plusieurs premiers conduits, ou un ou plusieurs premiers conduits agencés en série avec un ou plusieurs seconds conduits, voire comprendre un ou plusieurs seconds conduits.

De même, il a été décrit ci-dessus que le circuit de climatisation du compartiment passager comprend un conduit d'air fait d'un seul premier conduit, et deux autres conduits d'air faits d'un premier conduit et d'un second conduit en série l'un derrière l'autre.

En variante, le circuit de climatisation du compartiment passager comprend moins ou plus de trois conduits d'air. Chaque conduit d'air est défini uniquement par un premier conduit, ou uniquement par un second conduit, voire par un ou plusieurs premiers conduits agencés en série avec un ou plusieurs seconds conduits.

Le nombre d'orifices d'entrée d'air ou d'orifices de passage d'air fournis dans la structure porteuse peut être différent de ce qui est représenté sur les figures. Il dépend de la conception des conduits d'air.

## Revendications

1. Tableau de bord (7), comprenant :
- une structure porteuse (9) ayant une première grande face (15) et une seconde grande face (17) opposée à la première grande face (15) ;
- une première structure déformable (11), délimitant au moins un premier conduit (19, 21, 23, 25) ayant un côté ouvert (27), la première structure déformable (11) étant fixée à la structure porteuse (9), le côté ouvert (27) du ou de chaque premier conduit (19, 21, 23, 25) étant fermé par la première grande face (15) de la structure porteuse (9),
**caractérisé en ce que** le tableau de bord comprend en outre
- une seconde structure déformable (13), délimitant au moins un second conduit (31, 33) ayant un côté ouvert (35), la seconde structure déformable (13) étant fixée à la structure porteuse (9), le côté ouvert (35) du ou de chaque second conduit (31, 33) étant fermé par la seconde grande face (17) de la structure porteuse (9) dans lequel la première structure déformable (11) et/ou la seconde structure déformable (13) sont uniquement fixées à la structure porteuse (9).

2. Tableau de bord selon l'une quelconque des revendications précédentes, où la première structure déformable (11) et/ou la seconde structure déformable (13) sont faites d'une matière plastique avec une épaisseur inférieure à 2 mm, par exemple en PE ou en PP,

3. Tableau de bord selon l'une quelconque des revendications précédentes, où la première structure déformable (11) et/ou la seconde structure déformable (13) sont faites d'un plastique expansé.

4. Tableau de bord selon l'une quelconque des revendications précédentes, où la première structure déformable (11) et/ou la seconde structure déformable (13) sont fixées à la structure porteuse (9) par des soudures, par exemple des soudures par ultrasons.

5. Tableau de bord selon l'une quelconque des revendications précédentes, dans lequel le tableau de bord (7) comprend un couvercle de garniture (67) couvrant la structure porteuse (9), la première structure déformable (11) et la seconde structure déformable (13), et définissant une surface visible (69) pour les passagers du véhicule.

6. Tableau de bord selon l'une quelconque des revendications précédentes, où l'au moins un premier conduit (21, 23, 25) et l'au moins un second conduit (31, 33) sont en communication fluidique l'un avec l'autre et forment ensemble un conduit d'air, l'un parmi les au moins un premier conduit (21, 23, 25) et au moins un second conduit (31, 33) définissant une section amont du conduit d'air, l'autre parmi les au moins un premier conduit (21, 23, 25) et au moins un second conduit (31, 33) définissant une section aval du conduit d'air.

7. Tableau de bord selon l'une quelconque des revendications précédentes, dans lequel la structure porteuse (9) comprend au moins deux entrées d'air (57, 59, 61), l'une des entrées d'air (57, 59) étant en communication fluidique avec le premier conduit (19) et une autre des entrées d'air (61) étant en communication fluidique avec le second conduit (31, 33).

8. Tableau de bord selon l'une quelconque des revendications précédentes, où une portion de la première structure déformable définissant l'au moins un premier conduit (21, 23, 25) et/ou une portion de la seconde structure déformable définissant l'au moins un second conduit (31, 33) ont une section transversale essentiellement en forme de U.

9. Véhicule automobile (1) comprenant un compartiment passager (3), un pare-brise (5) et un tableau de bord (7) selon l'une quelconque des revendications précédentes logé dans le compartiment passager (3), l'au moins un premier conduit (19, 21, 23, 25) appartenant à un circuit de dégivrage (48) et ayant des orifices (49) destinés à souffler de l'air vers le pare-brise (5), l'au moins un second conduit (31, 33) appartenant à un circuit (51) de climatisation du compartiment passager (3) et approvisionnant en air des orifices (53) agencés pour souffler de l'air dans l'atmosphère du compartiment passager (3).

10. Véhicule automobile selon la revendication 9, où les orifices de soufflage d'air (53) approvisionnés par l'au moins un second conduit (31, 33) débouchent directement dans un volume situé à l'arrière du tableau de bord (7).

## Patentansprüche

1. Armaturenbrett (7), umfassend:
- eine Lagerstruktur (9) mit einer ersten Hauptfläche (15) und einer der ersten Hauptfläche (15) gegenüberliegenden zweiten Hauptfläche (17);
- eine erste verformbare Struktur (11), die mindestens einen ersten Kanal (19, 21, 23, 25) mit einer offenen Seite (27) begrenzt, wobei die erste verformbare Struktur (11) an der Tragstruktur (9) befestigt ist, wobei die offene Seite (27) des oder jedes ersten Kanals (19, 21, 23, 25) durch die erste Hauptfläche (15) der Tragstruktur (9) verschlossen ist,
**dadurch gekennzeichnet, dass** das Armaturenbrett ferner umfasst:
- eine zweite verformbare Struktur (13), die mindestens einen zweiten Kanal (31, 33) begrenzt, der eine offene Seite (35) aufweist, wobei die zweite verformbare Struktur (13) an der Tragstruktur (9) befestigt ist, wobei die offene Seite (35) des oder jedes zweiten Kanals (31, 33) durch die zweite Hauptfläche (17) der Tragstruktur (9) verschlossen ist, wobei die erste verformbare Struktur (11) und/oder die zweite verformbare Struktur (13) nur an der Tragstruktur (9) befestigt ist.

2. Armaturenbrett nach einem der vorstehenden Ansprüche, wobei die erste verformbare Struktur (11) und/oder die zweite verformbare Struktur (13) aus einem Kunststoffmaterial mit einer Dicke von weniger als 2 mm hergestellt sind, zum Beispiel aus PE oder PP hergestellt ist,

3. Armaturenbrett nach einem der vorstehenden Ansprüche, wobei die erste verformbare Struktur (11) und/oder die zweite verformbare Struktur (13) aus einem geschäumten Kunststoffmaterial hergestellt sind.

4. Armaturenbrett nach einem der vorstehenden Ansprüche, wobei die erste verformbare Struktur (11) und/oder die zweite verformbare Struktur (13) durch Schweißungen, zum Beispiel durch Ultraschallschweißungen, an der Tragstruktur (9) befestigt sind.

5. Armaturenbrett nach einem der vorstehenden Ansprüche, wobei das Armaturenbrett (7) eine Verkleidungsabdeckung (67) umfasst, die die Tragstruktur (9), die erste verformbare Struktur (11) und die zweite verformbare Struktur (13) abdeckt und eine sichtbare Oberfläche (69) für die Insassen des Fahrzeugs definiert.

6. Armaturenbrett nach einem der vorstehenden Ansprüche, wobei der mindestens eine erste Kanal (21, 23, 25) und der mindestens eine zweite Kanal (31, 33) in Fluidverbindung miteinander stehen und zusammen einen Luftkanal bilden, wobei einer von dem mindestens einen ersten Kanal (21, 23, 25) und dem mindestens einen zweiten Kanal (31, 33) einen stromaufwärts gelegenen Abschnitt des Luftkanals definiert, wobei der andere von dem mindestens einen ersten Kanal (21, 23, 25) und dem mindestens einen zweiten Kanal (31, 33) einen stromabwärts gelegenen Abschnitt des Luftkanals definiert.

7. Armaturenbrett nach einem der vorstehenden Ansprüche, wobei die Tragstruktur (9) mindestens zwei Lufteinlässe (57, 59, 61) umfasst, wobei einer der Lufteinlässe (57, 59) in Fluidverbindung mit dem ersten Kanal (19) steht und ein anderer der Lufteinlässe (61) in Fluidverbindung mit dem zweiten Kanal (31, 33) steht.

8. Armaturenbrett nach einem der vorstehenden Ansprüche, wobei ein Teil der ersten verformbaren Struktur, der den mindestens einen ersten Kanal (21, 23, 25) definiert, und/oder ein Teil der zweiten verformbaren Struktur, der den mindestens einen zweiten Kanal (31, 33) definiert, einen im Wesentlichen u-förmigen Querschnitt aufweisen.

9. Kraftfahrzeug (1), umfassend einen Fahrgastraum (3), eine Windschutzscheibe (5) und ein Armaturenbrett (7) nach einem der vorstehenden Ansprüche, das in dem Fahrgastraum (3) untergebracht ist, wobei der mindestens eine erste Kanal (19, 21, 23, 25) zu einem Enteisungskreislauf (48) gehört und Öffnungen (49) zum Blasen von Luft in Richtung der Windschutzscheibe (5) aufweist, wobei der mindestens eine zweite Kanal (31, 33) zu einem Kreislauf (51) zur Klimatisierung des Fahrgastraums (3) gehört und Luft an Öffnungen (53) liefert, die angeordnet sind, um Luft in die Atmosphäre des Fahrgastraums (3) zu blasen.

10. Kraftfahrzeug nach Anspruch 9, wobei die von dem mindestens einen zweiten Kanal (31, 33) versorgten Luftausblasöffnungen (53) direkt in ein hinter dem Armaturenbrett (7) befindliches Volumen münden.

## Claims

1. Dashboard (7), comprising:
- a bearing structure (9) having a first main face (15) and a second main face (17) opposite the first main face (15);
- a first deformable structure (11) delimiting at least one first duct (19, 21, 23, 25) having an open side (27), the first deformable structure (11) being attached to the bearing structure (9), the open side (27) of the or each first duct (19, 21, 23, 25) being closed by the first main face (15) of the bearing structure (9),
**characterized in that** the dashboard further comprises
- a second deformable structure (13) delimiting at least one second duct (31, 33) having an open side (35), the second deformable structure (13) being attached to the bearing structure (9), the open side (35) of the or each second duct (31, 33) being closed by the second main face (17) of the bearing structure (9), the first deformable structure (11) and/or the second deformable structure (13) only being attached to the bearing structure (9).

2. Dashboard according to any of the preceding claims, wherein the first deformable structure (11) and/or the second deformable structure (13) are made from a plastics material with a thickness of less than 2 mm, for example made of PE or PP,

3. Dashboard according to either of the preceding claims, wherein the first deformable structure (11) and/or the second deformable structure (13) are made from a foamed plastics material.

4. Dashboard according to any of the preceding claims, wherein the first deformable structure (11) and/or the second deformable structure (13) are attached to the bearing structure (9) by welds, for example by ultrasonic welds.

5. Dashboard according to any of the preceding claims, wherein the dashboard (7) comprises a trim cover (67) covering the bearing structure (9), the first deformable structure (11), and the second deformable structure (13), and defining a visible surface (69) for the passengers of the vehicle.

6. Dashboard according to any of the preceding claims, wherein the at least one first duct (21, 23, 25) and the at least one second duct (31, 33) are in fluidic communication with each other and together form an air duct, one of the at least one first duct (21, 23, 25) and the at least one second duct (31, 33) defining an upstream portion of the air duct, the other of the at least one first duct (21, 23, 25) and the at least one second duct (31, 33) defining a downstream portion of the air duct.

7. Dashboard according to any of the preceding claims, wherein the bearing structure (9) comprises at least two air inlets (57, 59, 61), one of the air inlets (57, 59) being in fluidic communication with the first duct (19) and another of the air inlets (61) being in fluidic communication with the second duct (31, 33).

8. Dashboard according to any of the preceding claims, wherein a part of the first deformable structure defining the at least one first duct (21, 23, 25) and/or a part of the second deformable structure defining the at least one second duct (31, 33) have a substantially U-shaped cross section.

9. Motor vehicle (1) comprising a passenger compartment (3), a windshield (5), and a dashboard (7) according to any of the preceding claims housed in the passenger compartment (3), the at least one first duct (19, 21, 23, 25) belonging to a de-icing circuit (48) and having orifices (49) for blowing air toward the windshield (5), the at least one second duct (31, 33) belonging to a circuit (51) for air-conditioning the passenger compartment (3) and supplying air to orifices (53) arranged to blow air into the atmosphere of the passenger compartment (3).

10. Motor vehicle according to claim 9, wherein the air-blowing orifices (53) supplied by the at least one second duct (31, 33) open directly into a volume located behind the dashboard (7).
